(19) **Europäisches Patentamt**

**European Patent Office**

**Office européen des brevets**

(11) **EP 0 989 444 B1**

(12) **EUROPEAN PATENT SPECIFICATION**

(45) Date of publication and mention
of the grant of the patent:
**29.11.2006 Bulletin 2006/48**

(51) Int Cl.:
*G02F 1/1337* (2006.01)    *G02F 1/133* (2006.01)

(21) Application number: **99118066.2**

(22) Date of filing: **23.09.1999**

(54) **Liquid crystal display device**

Flüssigkristallanzeigevorrichtung

Dispositif d'affichage à cristaux liquides

(84) Designated Contracting States:
**DE FR GB NL**

(30) Priority: **25.09.1998 JP 27155598**

(43) Date of publication of application:
**29.03.2000 Bulletin 2000/13**

(73) Proprietor: **Hitachi, Ltd.**
**Tokyo (JP)**

(72) Inventors:
• **Nishio, Tetsuya**
  **Chiba-shi,**
  **Chiba-ken (JP)**
• **Kobayashi, Setsuo**
  **Mobara-shi,**
  **Chiba-ken (JP)**
• **Matsuyama, Shigeru**
  **Mobara-shi,**
  **Chiba-ken (JP)**
• **Kitamura, Teruo**
  **Hitachinaka-shi,**
  **Ibaraki-ken (JP)**

(74) Representative: **Beetz & Partner**
**Steinsdorfstrasse 10**
**80538 München (DE)**

(56) References cited:
**EP-A- 0 821 048**        **US-A- 5 331 081**

• HARTMANN W J A M ET AL: "INFLUENCE OF THE CRYSTALLINITY OF THE ALIGNMENT LAYER ON THE BISTABILITY OF THE SURFACE-STABILIZED FERROELECTRIC LIQUID-CRYSTAL EFFECT" APPLIED PHYSICS LETTERS,US,AMERICAN INSTITUTE OF PHYSICS. NEW YORK, vol. 55, no. 12, 18 September 1989 (1989-09-18), pages 1191-1193, XP000080507 ISSN: 0003-6951
• SEO D -S ET AL: "EFFECTS OF THE CRYSTALLINITY OF ORIENTATION FILM AND MESOGENIC COREOF LIQUID CRYSTALS FOR PRETILT ANGLE GENERATION ON RUBBED POLYMIDE SURFACES" LIQUID CRYSTALS,GB, TAYLOR AND FRANCIS LTD, LONDON, vol. 19, no. 2, 1 August 1995 (1995-08-01), pages 289-292, XP000533259 ISSN: 0267-8292
• TAKIMOTO A. ET AL: "ELECTROPHOTOGRAPHIC AND STRUCTURAL STUDIES ON NOVEL PHOTOCONDUCTIVE POLYIMIDE FILMS" J. APPL. PHYS., vol. 70, no. 5, 1 September 1991 (1991-09-01), pages 2799-2805, XP002135108
• PATENT ABSTRACTS OF JAPAN vol. 1996, no. 11, 29 November 1996 (1996-11-29) & JP 08 179327 A (MATSUSHITA ELECTRIC IND CO LTD), 12 July 1996 (1996-07-12)

## Description

BACKGROUND OF THE INVENTION

1. Field of the Invention.

The present invention relates to liquid crystal display devices, and specifically, to an improvement for alignment films thereof.

2. Description of the Related Art

Liquid crystal display devices are in wide use as devices for displaying several image including both static and dynamic pictures.

The liquid crystal display device has a liquid crystal display panel comprising a pair of substrates at least one of which is formed of such material having sufficient optical transmissivity as glass, and a liquid crystal layer being interposed between the pair of substrates. An electrode is provided for each pixel of the liquid crystal display panel, and orientation directions of liquid crystal molecules in the liquid crystal layer are controlled by the electrode for each pixels. The liquid crystal display devices of this kind are classified into either "a passive-matrix type" which turns on and off the respective pixels by applying voltages for the electrodes selectively, or "a active-matrix type" which has an active element (switching element) for each pixel thereof and turns on and off the respective pixels by selecting the active elements respectively. The liquid crystal display device of the active-matrix type has advantages in contrast ratio and high speed of video response thereof.

Liquid crystal display devices of the active-matrix type have utilized so-called a vertical electric field scheme (called TN -Twisted Nematic- scheme, also) which applies an electric field between an electrode formed on one of the pair of substrates and another electrode formed on another of the pair of substrates for changing orientation directions of liquid crystal molecules in the liquid crystal layer, conventionally. However, liquid crystal display devices utilizing so-called lateral electric field scheme (called IPS -In Plane Switching- scheme, also) which applies an electric field to the liquid crystal layer in a substantially parallel direction to a main surface of at least one of the pair of substrates are realized recently.

The liquid crystal display device of the lateral electric field type employing comb-teeth like electrodes formed on one of the pair of substrates so as to obtain exceedingly wide viewing angle thereof is known (see, Japanese Patent Publication No. Sho 63-21907 (JP-B-21907/1988) and USP 4,345,249).

The paper "influence of the crystallinity of the alignment layer on..." by Hartmann and others in "Applied Physics Letters", volumn 55, number 12, September 18, 1989, pages 1191 and following, examines the influence of the crystallinity of the alignment layers on the electrooptical behaviour of ferroelectric liquid crystals. The degree of crystallisation of thin nylon 6.6 alignment layers was varied using thermal anneal methods and determined by Fourier transform infrared spectroscopy.

The paper "preliminary communication effects of the crystallinity of..." by Seo and others in "Liquid Crystals", Taylor and Francis Ltd., London, volumn 19, number 2, pages 289-292, refers to the effect of the crystallinity of polyimide and of the birefringence of liquid crystal on pretilt angle generation in nematics on rubbed PI surfaces.

SUMMARY OF THE INVENTION.

It is however, pointed that phenomena called sticking images (sticked image) tend to appear in the lateral electric field-type liquid crystal display device mentioned above.

The liquid crystal display device divides a potential difference of a driving voltage (a driving voltage difference, hereinafter) being applied between the electrodes into units called "tone (gray scale)", and modulate a brightness of a image to be displayed in accordance with the tones. In accordance with an increase of the driving voltage difference, an optical transmissivity of each of the pixels disposed in the liquid crystal display panel either increase (in Normally-Black mode) or decrease (in Normally-White mode), and relationship between the driving voltage difference and the optical transmissivity is expressed by a transmissivity curve. Therefore, an optical transmissivity of the pixel is determined as a value of the transmissivity curve which corresponds to the driving voltage difference of the predetermined tone being applied between the electrodes thereof.

A potential difference for each of the tones is c.a. 20 mV, and remains only around 0.25% of a maximum value of the driving voltage when the maximum value is 8V. Assuming the maximum value of the driving voltage as a potential difference of the driving voltages for displaying the pixel as white and as black, a relative optical transmissivity of the pixel varies 0-100% in accordance with a variation range of 8V of the driving voltage. When an image displayed by a driving voltage close to 0V, an optical transimissivity error of 0.6% appearing on the transmissivity curve with respect to a predetermined tone (driving voltage) makes the optical transmissivity of the pixel correspond to another tone far beyond the predetermined tone so that the brightness of the image becomes uneven and tones of colors therein are reversed. Such phenomena mentioned here are called "sticking image".

This phenomenon of sticking image tends to appear at higher temperature (55°C) rather than at normal temperature (25°C). The sticking image is evaluated by differences between brightness measured in the liquid crystal display devices and that determined in accordance with the optical transmissivity given by the transmissivity curve in accordance with the driving voltage applied thereto.

The present invention has been made in view of the technical background mentioned above, and an object of the invention is to provide an improved liquid crystal display device suitable for suppressing the sticking images.

Some representative means of the present inventions as disclosed herein will be briefly summarized as follows.

The present invention improves an alignment film being utilized for a liquid crystal display devices comprising a pair of substrates and a liquid crystal layer interposed therebetween. At least one of the substrate has an alignment film on a surface thereof at a side of (confronting) the liquid crystal layer.

A liquid crystal display device according to the present invention has the feature that the alignment film has an elasticity modulus of not less than 1.8 GPa ($1.8 \times 10^9 N/m^2$) being measured with a measurement error of $\pm 0.01$ GPa at temperature of 55°C including fluctuation of $\pm 5$°C.

According to this feature, the alignment film obtains a relatively large modulus of elasticity, so that movements of liquid crystal molecules in te vicinity of (esp. contacting with) the alignment film in accordance with an electric filed are not affected by the alignment film.

Features other than above are:

An optical characteristic thereof indicates that a difference between optical transmissivities in accordance with a driving voltage supplied thereto for increasing the driving voltage and for dropping the driving voltage does not exceed 0.6%, while a measurement error for each of the optical transmissivities is $\pm 0.01$% or less; and

An optical characteristic thereof indicates that a relative optical transmissivity difference which is determined as a deviation ratio of the optical transmissivity for decreasing the driving voltage supplied thereto to that for increasing the driving voltage in accordance with the driving voltage does not exceed 6%, while a measurement error for each of the optical transmissivities is $\pm 0.01$% or less.

According to at least one of the above features, hysteresis of an optical transmissivity of the liquid crystal display panel based on a difference of liquid crystal molecules' behaviors between status thereof being driven by an electric field and getting back to normal is reduced drastically, so that sticking images appearing in a screen of the liquid crystal display panel is suppressed.

These and other objects, features and advantages of the present invention will become more apparent from the following description when taken in conjunction with the accompanying drawings.

BRIEF DESCRIPTION OF THE DRAWINGS

Fig. 1 is a curve graph showing an experimental results of optical characteristics of the liquid crystal display panel according to the present invention;
Fig. 2 is a schematic diagram showing an outlined structure of the liquid crystal display device according to the present invention;
Fig. 3 is schematic diagrams illustrating a planar configuration and cross sectional configurations of one of the pixel regions of the liquid crystal display device;
Fig. 4 is an explanatory diagram for explaining the relationship between orientation directions of the alignment films and bending directions of the liquid crystal molecules;
Fig. 5 is a curve graph showing an experimental results of optical characteristics of the conventional liquid crystal display panel;
Fig. 6 is a drawing for showing molecular structures of polymeric materials suitable for the alignment film;
Fig. 7 is a schematic diagram of an outlined structure of the measuring system utilized for evaluating optical characteristics of the liquid crystal display; and
Fig. 8 is an explanatory diagram of an atomic force microscope for measuring elasticity modulus of the alignment film.

DETAILED DESCRIPTION

An embodiment of the liquid crystal display device according to the present invention will be explained with reference to the accompanying drawings as follows.

<Outlined structure of the liquid crystal display device>

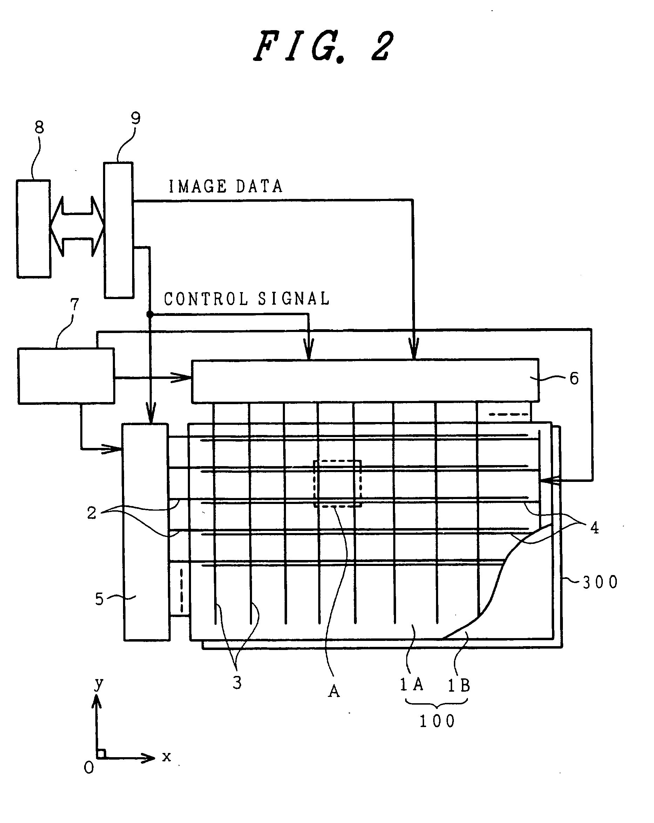

Fig. 2 shows an outlined structure of a liquid crystal display device according to the present invention. In Fig. 2, a liquid crystal display panel 100 comprises a pair of substrate 1A, 1B being disposed so as to confront one another, and a liquid crystal layer (not shown) is interposed between the pair of substrate. At least one of the pair of substrates 1A, 1B is so-called transparent substrate having sufficient optical transmissivity to let light go into or out from the liquid crystal layer. In this embodiment, transparent substrates are utilized for both of the pair of substrates. On a surface at the liquid crystal layer side of one of the pair of substrates 1A, scanning signal lines 2 and counter voltage signal lines 4 both extending in x-direction (row direction) are juxtaposed along y-direction (column direction) transverse to the x-direction. Therefore, in Fig. 2, a scanning signal line 2 and a counter voltage signal line disposed in the vicinity thereof, another scanning signal line 2 spaced relatively wider from the counter voltage signal line 4, another counter voltage signal line 4 ... are disposed sequentially in this order from upper side of the transparent substrate 1A.

Video signal lines 3 extending in the y-direction are juxtaposed along the x-direction and are electrically isolated from the scanning signal lines 2 and the counter voltage signal lines 4.

Pixels are formed in respective rectangular regions of the transparent substrate 1A each of which is enclosed by respective one of the scanning signal lines 2, respective one of the counter voltage signal lines 4, and the pixels are arranged in a matrix-manner for composing a displaying plane of the liquid crystal display device. Color filters (explained later) of red, green, and blue are provided repeatedly in this order for these pixels being juxtaposed in either the x-direction or the y-direction, and a group of respective ones of the red, green, and blue pixels composes an unit pixel utilized as one element for displaying a color image. The detailed structure of the pixel will be explained as follows.

The liquid crystal display device comprises a vertical scanning circuit 5 as an external circuit to the liquid crystal display panel 100 for supplying scanning signals (voltages) for the respective scanning signal lines 2 sequentially. The liquid crystal display device also comprises a video signal driving circuit 6 as an external circuit to the liquid crystal display panel 100. The video signal driving circuit 6 supplies video signals (voltages) to the respective video signal lines in accordance with a timing of the scanning signal being supplied to the respective scanning signal lines.

The vertical scanning circuit 5 and the video signal driving circuit 6 receives electric powers thereto from a liquid crystal driving power supply circuit 7. Image information transmitted from a CPU 8 (Central Processing Unit, usually provided externally to the liquid crystal display device) is divided to displaying data and control signals in a controller (usually included in the liquid crystal display device), and the displaying data and the control signals are inputted to the vertical scanning circuit 5 and the video signal driving circuit 6. To counter voltage signal lines 4 formed on the transparent substrate 1A, counter voltage signal including e.g. alternating signals are supplied from the liquid crystal driving power supply circuit 7.

<Structure of a Pixel Region>

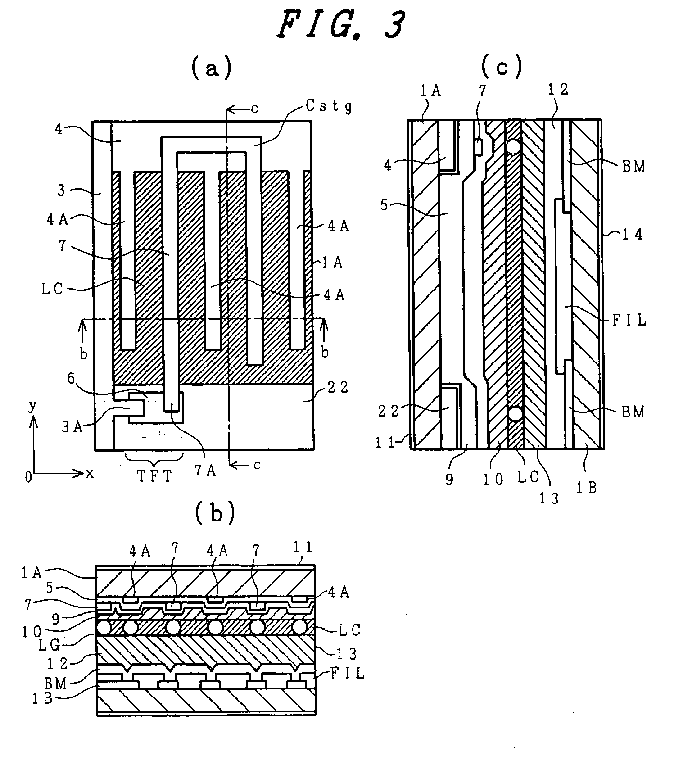

Fig. 3 shows an example of a pixel region being enclosed by a dotted frame A in Fig. 2. Fig. 3(a) is a plan view of the example of the pixel region, Fig. 3(b) is a cross sectional view along a line b-b of Fig. 3(a), and Fig. 3(c) is a cross sectional view along a line c-c of Fig. 3(a)..

As Fig. 3(a) shows, a region corresponding to one pixel is enclosed by one of the scanning signal lines 2 and one of the counter voltage signal lines 4 in the y-direction, and a pair of the video signal lines 3 adjacent to one another in the x-direction. .

In this example, the scanning signal lines 2 and the counter voltage signal lines 4 are formed at the same level and of the same material as one another, by i.e. by the same process. A counter electrode 4A is formed to be integrated with the counter voltage signal line 4, and for instance, three of the counter electrodes are provided for each pixel.

Two of the three counter electrodes are disposed adjacent to the video signal lines 3 located at right and left sides of the pixel regions of Fig. 3(a), and extended in the y-direction. The remaining one of the counter electrodes 4A is disposed at a middle portion between the two of them and extended along the y-direction. .

On a surface on which the scanning signal lines 2 and the counter voltage signal lines 4 (including the counter electrode 4A) are formed, an insulating film 5 is formed so as to cover these scanning signal lines and these counter voltage signal lines (including these counter electrode).

The insulating film 5 functions as an interlayer insulating film for isolating the video signal lines 3 mentioned later from the scanning signal lines 2 and the counter voltage signal lines 4, as a gate insulating film for a thin-film transistor TFT mentioned later in a region where the thin-film transistor is formed, and as a dielectric film for a capacitance element Cstg in a region where the capacitance element is formed..

The thin-film transistor is fabricated so as to overlap a part of the scanning signal lines covered by an insulating film. The thin-film transistor is fabricated by forming a semiconductor layer 6 (e.g. amorphous silicon: a-Si) on the insulating film covering the part of the scanning signal line, and by forming a drain electrode 3A and a source electrode 7A on the semiconductor layer 6 spacing both of the electrodes from one another, and is finished as a MIS (Metal-Insulator-Semiconductor) transistor of so-called reversed staggered structure utilizing the part of the scanning signal line for a gate electrode thereof.

In this example, the drain electrode 3A and the source electrode 7A are formed at the same level and of the same material as those for the video signal line 3 and the pixel electrode 7, and are, in other word, by the same process thereas. Thus, the drain electrode 3A is fabricated by extending (branching off) a part of the video signal line 3 extending in the y-direction in Fig. 3(a) toward the thin-film transistor. The source electrode 7A is fabricated to be integrated with the pixel electrode 7. As Fig. 3(a) shows, the pixel electrode comprises two portion thereof being disposed between respective pairs of the three counter electrodes 4A and extending in the y-direction and another portion thereof being disposed over the counter voltage signal line 4 and extending in the x-direction, and have a "U"-shape joining both of the formers (extending in the y-direction) with the latter (extending in the x-direction) at respective (upper) ends of the formers.

In an area where the pixel electrode 7 overlaps with the counter voltage signal line 4, the capacitance clement Cstg utilizing the insulating film 5 interposed between this pixel electrode 7 and this counter voltage signal line 4 as a dielectric film is formed. The capacitance clement Cstg takes effects for making the pixel electrode 7 store image information for long time during a period in which the thin-film transistor TFT is turned off.

Into a surface of the semiconductor layer 6 of the thin-film transistor TFT mentioned above which forms an interface with the drain electrode 3A or the source electrode 7A, phosphorus is doped for forming a n-type layer with high impurity concentration in the semiconductor layer around the surface. The drain electrode 3A and the source electrode 7A obtain ohmic contacts with the semiconductor layer 6 by this n-type layer. This example employs a process comprising, a step for forming the n-type layer in a whole region of an upper surface of the semiconductor layer 6, a step for fabricating the drain electrode 3A and the source electrode 7A on the upper surface of the semiconductor layer 6, and a step for etching the n-type layer utilizing the drain electrode and the source electrode as a mask so as to remove the n-type layer other than those formed in a region where the drain electrode and the source electrode are formed.

The transparent substrate 1A of the liquid crystal display panel 100 is finished by forming a protection film formed of e.g. a silicon nitride film on an upper surface of the insulating film 5 having the thin-film transistor TFT, the video signal lines 3, the pixel electrode 7 and the capacitance elements Cstg formed in the aforementioned manners, and by forming an alignment film 10 on an upper surface of the protection film 9. On another surface of the transparent substrate 1A opposite side to the liquid crystal layer LC side, a polarizing plate (polarizer) 11 is disposed.

As Fig. 3(b) shows, at a liquid crystal layer LC side of the transparent substrate 1B being disposed so as to confronting with the transparent substrate 1A, a light shielding layer BM diving a displaying region for every pixel is formed. In the example of Fig. 3(b), the light shielding film BM is formed also so as to cover the counter electrode 4A and the pixel electorde 7. The light shielding layer BM has both functions for preventing the thin-film transistor TFT from being irradiated by light directly and for improving displaying contrasts. Openings being formed in the light shielding layer BM define the pixel regions substantially..

Color filters are fabricated for covering the respective openings of the light shielding layer BM. The respective color filters corresponding to the pixel regions adjacent to each other in the x-direction have different colors from each other, and boundaries therebetween are formed on the light shielding layer BM. On a surface where the color filters FIL are formed, a leveling film 12 of a resin film or the like is formed, and an alignment film 13 is formed on the leveling layer 12. On another surface of the transparent substrate 1B opposite side to the liquid crystal layer LC side, a polarizing plate 14 is disposed.

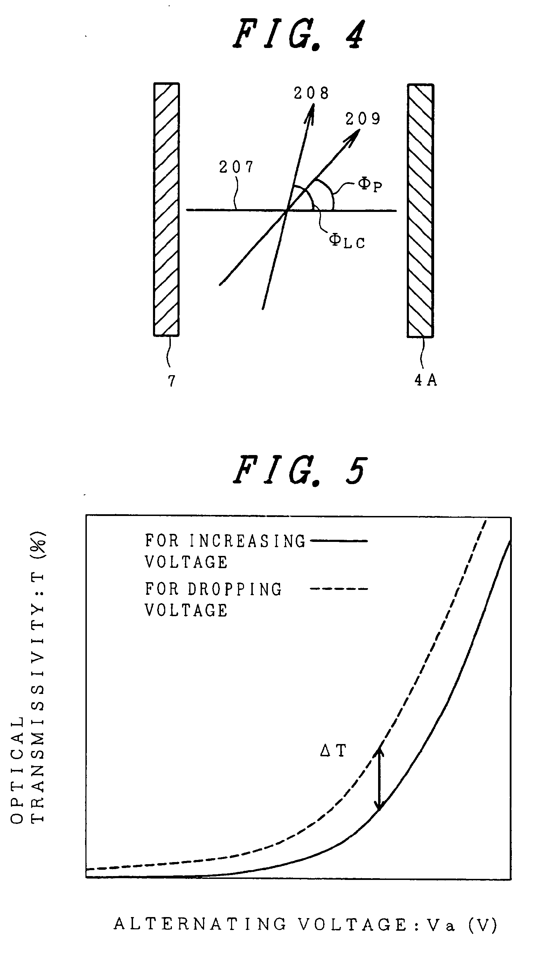

Relationships between the alignment film 10 formed on the substrate 1A and the polarizing plate 11, and between the alignment film 13 formed on the substrate 1B and the polarizing plate 14 will be explained with reference to Fig. 4 hereinafter. An angle between a rubbing direction 208 for both of the alignment films 10, 13 and a direction of an electric field 207 being applied between the pixel electrode 7 and the counter electrode 4A is shown as $\phi$LC. An angle between a polarization axis 209 of the polarizing plate 11 and the direction of the electric field 207 being applied between the pixel electrode 7 and the counter electrode 4A is shown as $\phi$LC. (A polarization axis denotes a polarization plane of light passing through the polarizing plate). A polarization axis of the polarizing plate 14 is perpendicular to the polarization axis 209 of the polarizing plate 11. A nematic-type liquid crystal substance having positive dielectric anisotropy $\Delta\epsilon$ of 7.3 (1kHz) and refractive anisotropy $\Delta n$ of 0.073 (589nm, 20°C) is utilized for the liquid crystal layer in this example.

The liquid crystal display device comprising the alignment films 10, 13 and the polarizing plate 11, 14 in the relationships mentioned above operates in i.e. normally black mode so that the liquid crystal display device enables light to pass through the liquid crystal layer LC by generating an electric field substantially parallel to the transparent substrate 1A in the liquid crystal layer LC thereof. Although the liquid crystal display device of the normally black mode is utilized for this example, a liquid crystal display device of i.e. normally white mode in which an amount of light passing through a liquid crystal layer thereof has a maximum without applying an electric field between a pixel electrode and a counter electrodes thereof may be utilized, as well.

<Alignment Film>

The alignment films 10,13 are usually formed of synthetic resin films (plastic films). Each of the alignment films is processed for forming an alignment pattern on an upper surface thereof by a rubbing treatment or the like. The alignment film determines initial orientations of the liquid crystal molecules in the liquid crystal layer in accordance with the alignment pattern thereof.

In this embodiment, polymeric material of polyamic acid series (having molecular weight of c.a. 40,000) is utilized for the alignment film.

Fabrication processes for the alignment film are described as follows. First of all, by dissolving polymers of the polyamic acid series in a solvent (e.g. N-butyl-2-pyrrolidone, butyrolactone, butylcellosolve, ctc.), varnish for the alignment film is obtained. A ratio of the polymers of the polyamic acid series to the solvent is set for instance as a weight ratio of the polymers of 18 wt%.

Next, by dripping the aforementioned varnish onto an upper surface of the protective film 9 (or, the leveling film 12) of the transparent substrate 1A (or, 1B) being mounted on a spinner, and then by rotating the substrate at 2000rpm during c.a. 40 seconds by the spinner, the upper surface of the protective film 9 (or, the leveling film 12) is coated with the varnish uniformly. (Spinner coating).

After the spinner coating, the transparent substrate being coated with the varnish is processed by a heat treatment under 80°C during 5 minutes (i.e. prebaking). Then, the transparent substrate is processed by a heat treatment under the temperature having a range from c.a. 200 °C to c.a. 260 °C during at least 10 minutes, preferably 20 minutes or more (i.e. baking, or stoving)..

By these heat treatments, the solvent hardly remains in a film (a coating film, hereinafter) formed by applying the varnish to the upper surface of the protection film 9 (or, the leveling film 12). By processing a surface of the coating film with a rubbing treatment along a direction in which the liquid crystal molecules should be oriented initially thereon, the alignment film 11 (or 13) is finished.

Each of the alignment films 10,13 being fabricated by the processes mentioned above has relatively large modulus of elasticity. Therefore, influences of the alignment film on a behavior of the liquid crystal molecules in response to an electric field applied thereto are reduced. While the liquid crystal molecules being driven (an orientation direction thereof being changed) by the electric field applied thereto return to an initial position (an initial orientation direction, usually under no-electric field) thereof, the influences of the alignment film is suppressed significantly.

The liquid crystal molecules in the liquid crystal layer LC are twisted in response to the electric field being applied thereto, and an optical transmissivity of the liquid crystal layer varies in accordance with an amount of these twists of the liquid crystal molecule. If the twisting variations of the liquid crystal molecules between predetermined range of the electric field differ from increasing the electric field to dropping the electric field, hysteresis appears in the optical transmission property of the liquid crystal layer with respect to the electric field. Especially for the liquid crystal display device of the lateral electric field scheme, the twisting amounts of the liquid crystal molecules depends directly on the electric field applied thereto. Therefore, the sticking image being generated by the hysteresis comes into a problem therefor.

The alignment film fabricated by aforementioned processes has a sufficient elasticity for suppressing influences thereof on behaviors of the liquid crystal molecules in response to the electric field. Providing such a sufficient elasticity for the alignment layer, a surface of the alignment film does not follow motions of the liquid crystal molecules. Therefore, regardless of whether the electric field intensity increases or decreases, the liquid crystal molecules arc twisted in response to the electric field with a high repeatability, and vary orientation directions thereof with respect to intensity of the electric filed precisely. Especially for the liquid crystal display device of the lateral electric field scheme, the alignment layer having the elasticity mentioned above is effective for reducing the sticking images. This effect is acknowledged experimentally as suppressions of image retention at changing images. Moreover in this experiment, visible sticking images are hardly generated to be observed, and if appear, but fade out within a few minutes.

The alignment layer having such an elasticity as mentioned above may be obtained by irradiating the coating film with light (photon beam), also.

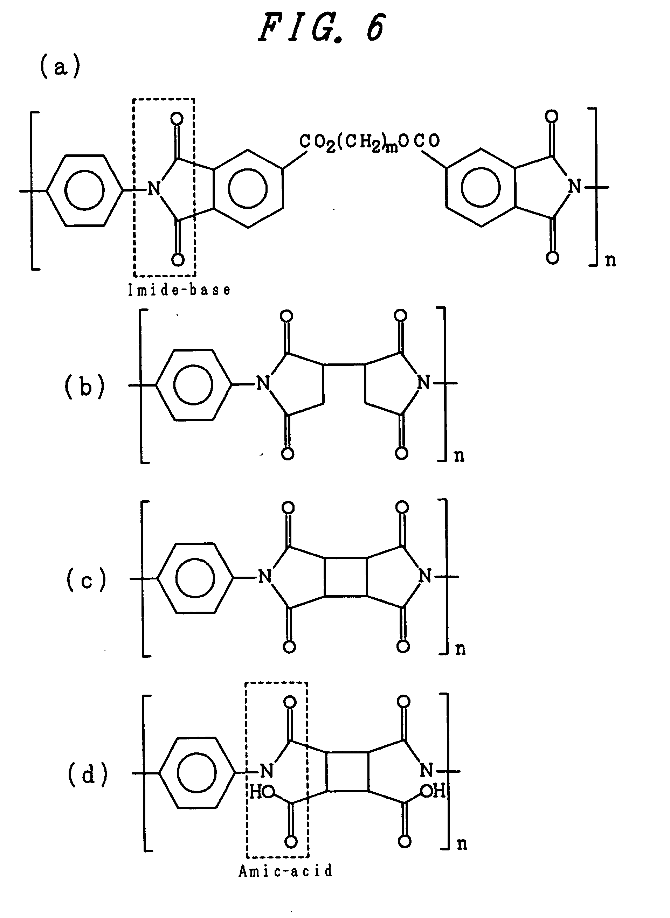

This sort of the alignment film can be realized not only by the polymeric materials of the polyamic acid series mentioned above, but also polymeric materials of polyimide and polymeric materials of polyamide. Four examples of the polymeric materials utilized for this alignment film are shown in Figs. 6(a)-6(d). Figs. 6(a)-6(c) shows the polymeric materials of polyimide series, and the material of Fig. 6(b) a distance between imide bases of which is shorter than that of the material of Fig. 6(a) is preferable to fabricate the alignment layer mentioned above. Moreover, the material of Fig. 6(c) which connects imide bases thereof by a pair of single bonds is preferable to fabricate the alignment layer mentioned above in comparison with the material of Fig. 6(b). For providing moderate elasticity for an alignment film, it is preferable to reduce rotations around axes of chemical bonds in a polymeric material forming the alignment film. Fig. 6(d) shows a polymeric material of polyamic acid series having a similar structure to that of the polymeric material of Fig. 6(d). In the view of the molecular structure mentioned above, the polymeric material of Fig. 6(d) is a preferable ingredient for fabricating the alignment film having moderate elasticity.

Another point to be considered for providing moderate elasticity for an alignment film is removals of the solvent at steps of the pre-baking and the baking in the aforementioned processes. For one of conventional examples, the pre-baking step is held under 70°C during 50-60 seconds, and the baking step is held under 230°C during 8 minutes. In each of the steps, a certain period is required to make a whole of the substrate to be processed reach the aforementioned temperature during the heat treatment. For instance, the certain period comes up to 5 minutes under the condition of the aforementioned conventional baking step, so that a period for keeping the whole of the substrate at 230°C exactly remains only 3 minutes. Therefore, solvents being contained in a varnish (a precursor material for the alignment film) remains in the alignment layer after these heat treatments, so that the alignment film hardly obtains a sufficient elasticity. However, setting at least one of the pre-baking period and the baking period longer than that for the conventional step as the aforementioned processes, the amount of the solvent remaining in the alignment film after the heat treatments is reduced sufficiently to allow the alignment film to obtain the moderate elasticity. Periods for the heat treatments, for instance, should be equal to 3 minutes or more for the pre-baking step, and equal to 10 minutes or more for the baking step. As for the baking step under a higher treatment temperature than the pre-baking step, it should be noticed exceedingly long period for the heat treatment. One of the criteria is setting the heat treatment period within 40 minutes. These heat treatment periods mentioned above are based on the heat treatment conditions being conventionally employed, and the other conditions (temperatures, etc.) may be modified in accordance with a sort of varnish to be utilized for fabricating the alignment layers.

One of methods for determining whether the alignment film has the aforementioned moderate elasticity or not is an evaluation of a crystallinity thereof. A degree of crystallinity of the alignment film is evaluated, for instance; by X-ray diffraction. A photograph of the X-ray diffraction of an alignment film having the aforementioned moderate elasticity shows ring shaped patterns called Debye-ring. Therefore, the alignment film contains a region in which a plurality of crystal grains of the aforementioned polymeric material orient randomly (i.e. a polycrystallized region). The elasticity of the alignment film is also evaluated by a density thereof.

Physical properties of the alignment film mentioned above will be considered hereinafter.

In following experiments, the alignment film 10 (or 13) being formed in the liquid crystal display device was peeled away, and was utilized as a specimen to be examined. Each measured value of temperature includes a permissible error of $\pm 5°C$, and each modulus of elasticity in the experimental results includes a permissible error of 1GPa in following explanations.

<Physical Properties of the Alignment Film 1>

As mentioned above, an alignment film was formed of an alignment film varnish which was prepared by dissolving polyamic acid of molecular weight of 40,000 as an ingredient thereof in solvent in a weight ration of 18 wt%. As a result of measuring a thickness of the alignment film by a probe-type thickness gage, the value thereof was indicated as c.a. 13 $\mu$m.

As a result of measuring a modulus of elasticity of the alignment film with a dynamic tensile elasticity gage, the value thereof was indicated as 2GPa ($2 \times 10^9N/m^2$) at temperature of 55°C..

The measurement conditions were: the alignment film is 40nm in length and 4nm in width, and frequency of vibrated oscillation thereof is 10% and dynamic stress thereof is 1%, and measurements were performed in humidity of 60%..

As a result of measuring the modulus of elasticity of the alignment film while varying the temperature between -50°C to 270°C, it was proved that the modulus of elasticity of the alignment film does not stay at the aforementioned value but decreases as temperature go up.

However, it was ascertained that as the alignment film has a modulus of elasticity of 2GPa ($2 \times 10^9N/m^2$) at temperature of 55°C, no sticking image is visible in the screen of the liquid crystal display panel, and the displaying quality thereof is improved.

Moreover, it was also ascertained that the modulus of elasticity of the alignment film not only should be

2GPa ($2 \times 10^9N/m^2$) but also may be greater than this value. This is based on the fact that as the modulus of elasticity becomes greater, the amount of the sticking images on the screen decreases. Thus, such alignment films having moduli of elasticity as 2.5GPa ($2.5 \times 10^9N/m^2$), 3GPa ($3 \times 10^9N/m^2$), 3.5GPa ($3.5 \times 10^9N/m^2$), 4GPa ($4 \times 10^9N/m^2$), 4.5GPa ($4.5 \times 10^9N/m^2$), 5GPa ($5 \times 10^9N/m^2$), .... at temperature of 55°C may be utilized as well.

<Physical Properties of the Alignment Film 2>

While the sticking images which this embodiment intends to solve have properties of increasing (deteriorating a displaying quality) at high temperature rather than normal temperature, evaluations of the sticking images at the high temperature (55°C) is preferable for grasping the behavior thereof in detail.

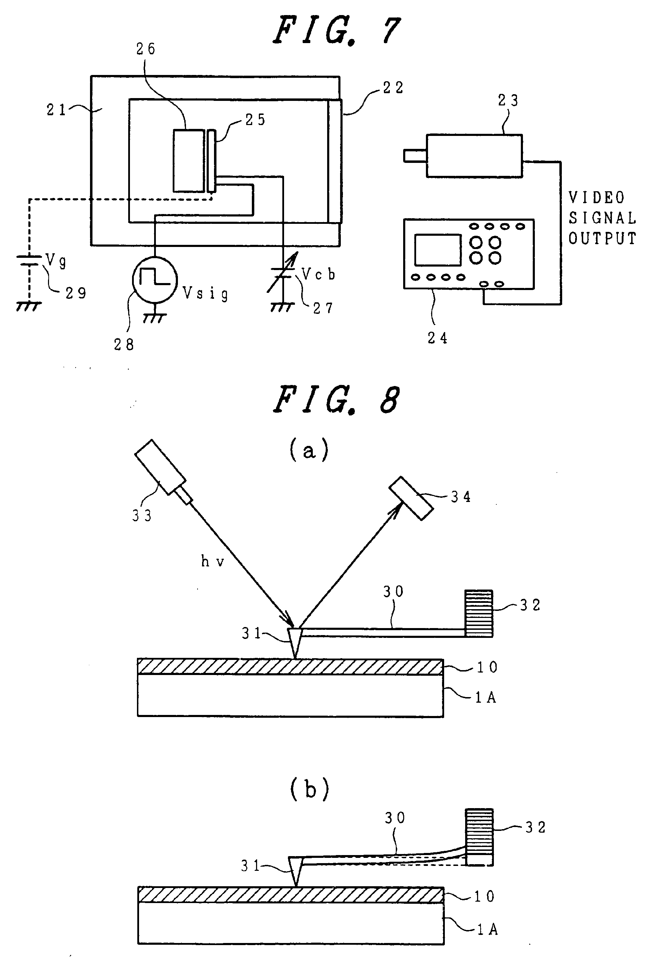

Under these circumstances, the sticking image before and after applying driving voltage to the liquid crystal display panel at temperature varying between 0 and 55 was evaluated as a difference appearing between the curves of T(Optical Transmissivity)-V(Driving Voltage) of the liquid crystal display panel for increasing and dropping the driving voltage (hysteresis). Fig. 7 shows an outlined structure of the measuring apparatus utilized for this experiment. A liquid crystal display panel 25 and a light source 26 are disposed in an isothermal chamber 21, and atmosphere therearound is kept at a designated temperature. Light emitted from the light source 26 and passing through the liquid crystal display panel 25 goes out from the isothermal chamber 21 through a window 22, and is detected by a photo-multiplier 23. The detection intensity of the light is converted to a video signal and sent to a measuring regulator 24, and the measuring regulator 24 calculates an optical transmissivity of the liquid crystal display panel. The liquid crystal display panel 25 receives signals from a counter voltage signal source 27 to counter voltage signal lines thereof, from a signal voltage source 28 to video signal lines thereof, and from a gate voltage source 29 to scanning signal lines thereof, respectively..

At first in the experiment, the light source 26 was turned on during 1 hour, and brightness thereof was stabilized. Next, setting the isothermal chamber 21 at a designated temperature in a range between -30°C and 55°C, the liquid crystal display panel 25 was left in the isothermal chamber during 15 minutes so as to stabilize temperature thereof. After the temperature of the liquid crystal display panel was stabilized, the measurement was performed.

As a fluctuation of the optical transmissivity is faint, stabilized supplies were utilized for signal sources 27,28 for preventing the measurement of the optical transmissivity from being affected by these signal sources. On the other hand, a waveform of a alternating driver voltage being outputted from the signal voltage source 28 was set as a rectangular waveform of 30Hz. This alternating driving voltage is applied between each of the pixel electrodes and each of the counter electrodes of the liquid crystal display panel, and the measurement of this experiment was performed under the same driving condition as that for a practical liquid crystal display device.

The measurement was performed by a sequence of (1) increasing the driving voltage (the aforementioned alternating driver voltage) from 0V to 8V for measuring the aforementioned T-V curve (Tb), (2) keeping the driving voltage at 8V during 30 minutes, (3) dropping the driving voltage from 8V to 0V for measuring the T-V curve (Ta). The measurements were held at intervals of 0.1V in the range between 0V and 8V so as to obtain the T-V curves by 162 measured points for increasing voltage direction and dropping voltage direction.

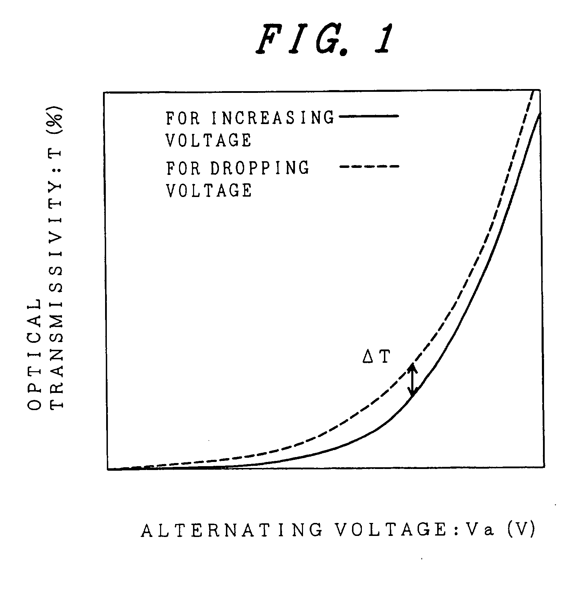

The T(Optical Transmissivity)-V(Driving Voltage) curves obtained by the measurements are shown in Fig. 1..

An amount of the sticking images at the designated voltage Va is given by a transmissivity difference $\delta T(Va)$ being defined as a following equation (1). .

$$\delta T(Va) = |Ta(Va) - Tb(Va)| \quad \cdots (1).$$

This measurements resulted in $\delta T(Va) = 0.6$ (%)..

The value of 0.6(%) was obtained under the precision of 0.01% for measuring the optical transmissivity, and the sticking images will be suppressed more as lower than this value as the transmissivity difference becomes.

<Physical Properties of the Alignment Film 3>.

According to the same measurement as mentioned above, a difference of relative transmissivities were obtained. As mentioned above, the relative transmissivity is defined as a following equation (2) by using the transmissivity difference $\delta T(Va)$ at an evaluation voltage in a range of the driving voltage in which maximum transmissivity varies from 0 to 90%.

$$|\Delta T(Va)| = \delta T(Va)/Tb(Va) \times 100 \quad \cdots (2)$$

The difference of the relative transmissivity $\Delta T$ (Va) for the evaluating voltage Va is obtained by this equation (2). This measurements resulted in $\Delta T(Va) = 6$ (%). The value of 0.6(%) was obtained under the precision of 0.01% for measuring the optical transmissivity, and the sticking images will be suppressed more as lower than this value as the transmissivity difference becomes.

<Physical Properties of the Alignment Film 4>.

The liquid crystal display panel was taken out of the liquid crystal display device, and a scaled portion where a pair of substrates adhere one another and a liquid crystal injection port of the liquid crystal display panel were cut off by a glass cutter. Then, the pair of substrates were separated from one another, and the liquid crystal substance stained on the substrate were washed off by acetone or the like. After drying a surface of the separated substrate of the liquid crystal display panel sufficiently, the alignment film was peeled away from the substrate..

A surface of the alignment film was measured by an atomic force microscope in a contact mode thereof. Fig. 8 shows an outlined structure of the atomic force microscope. The atomic force microscope comprises an cantilever 30, a probe 31 disposed at one end of the cantilever, a piezoelectric element to which another end of the cantilever is fixed, an optical source 33 irradiating light beam onto an upper surface of the one end of the cantilever, and a photo diode array 34 receiving the light beam reflected by the upper surface of the one end of the cantilever. A distance between a surface of the alignment film 10 as a specimen and the probe 31 is controlled by the piezoelectric element 32. This distance and a bending amount (a flexibility) of the cantilever are measured by the photo diode array 34. An outline of the measurement in the contact mode by the atomic force microscope are described in the article about NanoScope III AFM (Product of Digital Instruments, Co. Ltd.) on the Application Note 012 issued from Toyo Technica, Co. Ltd..

The experiment was performed at temperature of 55°C, in humidity of 50%, and a force curve according to a flexure of the cantilever 30 was measured by pushing the probe 31 into the aforementioned alignment film 10 as a manner shown in Fig.8(b).

As the result of the experiment, a ratio of a flexibility of the cantilever (x) and a penetration amount thereof ($\Delta L$) was obtained as $x/\Delta L = c.a.$ 1.26, and a elasticity modulus (G) of the alignment layer was calculated as 1.8GPa ($1.8 \times 10^9$N/m$^2$) using the ratio $x/\Delta L$ and a spring modulus of the cantilever (13N/m) under a measurement error of $\pm 0.01$..

The modulus of elasticity (G) was calculated by a following equation (3)..

$$G = (k \cdot LS) \cdot (x/\Delta L) \quad \cdots (3)$$

In the equation (3), k denotes the spring modulus of the cantilever, $\Delta L$ denotes the penetration amount of the cantilever, and x denotes the flexibility of the cantilever. On the other hand, a length (L) of a scanning region of the probe 31 was 25nm, an contacting area (S) of the probe with the alignment film 10 was 50nm×50nm, and a scanning frequency of the probe was 3.9Hz..

Relying upon the foregoing experimental results, it was ascertained that the modulus of elasticity of the alignment film should be at least 1.8GPa (1.8 × $10^9$N/m$^2$) if being measured at temperature of 55°C and under a measurement error of ±0.01GPa. It was also ascertained that as the modulus of elasticity measured under this error becomes greater then 1.8GPa, the amount of the sticking images on the screen decreases. Thus, such alignment films having moduli of elasticity as 2GPa (2 × $10^9$N/m$^2$), 2.5GPa (2.5 × $10^9$N/m$^2$), 3GPa (3 × $10^9$N/m$^2$), 3.5GPa (3.5 × $10^9$N/m$^2$), 4GPa (4 × $10^9$N/m$^2$), 4.5GPa (4.5 × $10^9$N/m$^2$), 5GPa (5 × $10^9$N/m$^2$), .... at temperature of 55°C may be utilized as well.

<Physical Properties of the Conventional Alignment Film>.

Fig. 5 shows a deviation between the aforementioned T (Optical Transmissivity)-V (Driving Voltage) curves of the conventional liquid crystal display device for both increasing the driving voltage and dropping the driving voltage, nearby the driving voltage of 0V. .

The modulus of elasticity of the alignment layer thereof was 0.01GPa (0.01 × $10^9$N/m$^2$). A image retention at changing images lasted for several hours. This image retention was evaluated as the transmissivity difference of 0.7%, the relative transmissivity difference of 7%, by setting the driving voltage at a value corresponding to a tone to which the naked eyes are most sensitive..

Although the preceding embodiment utilized the liquid crystal display device of the lateral electric field type, the present invention should be not limited thereto. For instance, the present invention is able to be applied to liquid crystal display devices of so-called vertical electric field type, pixel regions of which are composed by forming transparent electrodes on both sides of a pair transparent substrates sandwiching a liquid crystal layer and control optical transmissivity of the liquid crystal layer between the transparent electrodes..

As apparent from the foregoing explanation, the liquid crystal display device according to the present invention suppresses sticking images appearing in images displayed thereby drastically.

While we have shown and described several embodiments in accordance with the present invention, it is understood that the same is not limited thereto but is susceptible of numerous changes and modifications as known to those skilled in the art, and we therefore do not wish to be limited to the details shown and described herein but intend to cover all such changes and modifications as are encompassed by the scope of the appended claims.

**Claims**

1. A liquid crystal display device comprising:

a pair of substrates (1A, 1B) and a liquid crystal layer (LC) being interposed therebetween; and at least one organic alignment film (10) being disposed between one of the pair of substrate and the liquid crystal layer;

**characterized in that**
the at least one organic alignment film has an elasticity modulus of not less than 1.8 GPa (1.8x$10^9$N/m$^2$), a value of which is measured with a measurement error of ± 0.01 GPa at temperature of 55 °C including fluctuation of ± 5 °C.

2. A liquid crystal display device according to claim 1, further comprising:

at least one pixel electrode being disposed between the at least one alignment film and the one of the pair of substrate; and at least one counter electrode being disposed between the at least one alignment film and the one of the pair of substrate;

wherein the at least one pixel electrode and at least one counter electrode are spaced from one another so as to generate an electric field for controlling an optical transmissivity of the liquid crystal layer.

3. A liquid crystal display device according to claim 2, further comprising:

at least one switching element being disposed between the at least one alignment film and the one of the pair of substrate and being connected to the at least one pixel electrode; at least one video signal line for supplying a signal to the at least one pixel electrode through the at least one switching element and being disposed between the at least one alignment film and the one of the pair of substrate; and at least one counter voltage signal line for supplying a signal to the at least one counter electrode and being disposed between the at least one alignment film and the one of the pair of substrate.

4. A liquid crystal display device according to claim 3, further comprising:

at least one scanning signal line for transmitting a signal to switching the at least one switching element and being disposed between the at least one alignment film and the one of the pair of substrate.

5. A liquid crystal display device according to claim 1, further comprising:

at least one first electrode being disposed between the liquid crystal layer and the one of the pair of substrate; and
at least one second electrode being disposed between the liquid crystal layer and another of the pair of substrate;

wherein an optical transmissivity of the liquid crystal layer is modulated by an electric field applied between the at least one first electrode and the at least one second electrode.

## Patentansprüche

1. Flüssigkristallanzeigevorrichtung mit:

    zwei Substraten (1A, 1B) und einer dazwischen befindlichen Flüssigkristallschicht (LC), und zumindest einem organischen Ausrichtungsfilm (10) zwischen einem der zwei Substrate und der Flüssigkristallschicht;

    **dadurch gekennzeichnet, dass**
    der zumindest eine organische Ausrichtungsfilm einen Elastizitätsmodul von nicht weniger als 1,8 GPa (1,8 x $10^9$ N/m$^2$) hat, dessen Wert mit einem Messfehler von +/- 0,01 GPa bei einer Temperatur von 55 ° Celsius mit einer zulässigen Schwankung von +/- 5 ° Celsius zu bestimmen ist.

2. Flüssigkristallanzeigevornchtung nach Anspruch 1, die weiter aufweist:

    zumindest eine Pixelelektrode zwischen dem zumindest einem Ausrichtungsfilm und dem einen der zwei Substrate; und
    zumindest eine Gegenelektrode zwischen dem zumindest einen Ausrichtungsfilm und dem einen der zwei Substrate;

    wobei die zumindest eine Pixelelektrode und die zumindest eine Gegenelektrode voneinander so beabstandet sind, dass sie ein elektrisches Feld zur Steuerung der optischen Durchlässigkeit der Flüssigkristallschicht erzeugen.

3. Flüssigkristallanzeigevorrichtung nach Anspruch 2, mit:

    zumindest einem Schaltelement zwischen dem zumindest einen Ausrichtungsfilm und dem einen der zwei Substrate, das mit der zumindest einen Pixelelektrode verbunden ist;
    zumindest einer Videosignalleitung zum Zuführen eines Signals zu der zumindest einen Pixelelektrode durch das zumindest eine Schaltelement, die zwischen dem zumindest einen Ausrichtungsfilm und dem einen der zwei Substrate angebracht ist; zumindest einer Gegenspannungssignalleitung zum Zuführen eines Signals, zu der zumindest einen Gegenelektrode, die zwischen dem zumindest einen Ausrichtungsfilm und dem einen der zwei Substrate angeordnet ist.

4. Flüssigkristallanzeigevorrichtung nach Anspruch 3, mit:

    zumindest einer Abtastsignalleitung zum Zuführen eines Signals zum Schalten des zumindest einen Schaltelements, die zwischen dem zumindest einen Ausrichtungsfilm und dem einen der zwei Substrate angeordnet ist.

5. Flüssigkristallanzeigevorrichtung nach Anspruch 1, mit:

    zumindest einer ersten Elektrode zwischen der Flüssigkristallschicht und dem einen der zwei Substrate; und
    zumindest einer zweiten Elektrode zwischen der Flüssigkristallschicht und dem anderen der zwei Substrate;

    wobei die optische Durchlässigkeit der Flüssigkristallschicht durch ein elektrisches Feld moduliert wird, das zwischen der zumindest einen ersten Elektrode und der zumindest einer zweiten Elektrode angelegt wird

## Revendications

1. Dispositif d'affichage à cristaux liquides comprenant :

    une paire de substrats (1A, 1B) et une couche de cristaux liquides (LC) intercalée entre ceux-ci ; et
    au moins un film organique d'alignement (10) disposé entre un des substrats de la paire et la couche de cristaux liquides ;

    **caractérisé en ce qu'**
    au moins un film organique d'alignement a un module d'élasticité supérieur à 1.8 GPa au moins (1.8x$10^9$N/m$^2$), dont la valeur est mesurée avec une précision de mesure de $\pm$ 0.01 GPa à une température de 55 ° C avec une fluctuation de $\pm$ 5 ° C.

2. Dispositif d'affichage à cristaux liquides selon la revendication 1, comprenant en outre :

    au moins une électrode à pixels disposée entre le ou les films d'alignement et le premier substrat de la paire de substrats ; et
au moins une contre-électrode disposée entre le ou les films d'alignement et le premier substrat de la paire de substrats ;

dans lequel l'électrode ou les électrodes à pixels et la ou les contre-électrodes sont espacées entre elles de manière à générer un champ électrique pour commander une transmissivité optique de la couche de cristaux liquides.

3. Dispositif d'affichage à cristaux liquides selon la revendication 2, comprenant en outre :

au moins un élément de commutation disposé entre le ou les films d'alignement et le premier substrat de la paire de substrats, et connecté à l'électrode ou aux électrodes à pixels ;
au moins une ligne de signal vidéo pour délivrer un signal à l'électrode ou aux électrodes à pixels par l'intermédiaire de l'élément ou des éléments de commutation, disposée entre le ou les films d'alignement et le premier substrat de la paire de substrats ; et
au moins une ligne de signal de contre-tension pour délivrer un signal à la ou aux contre-électrodes, disposée entre le ou les films d'alignement et le premier substrat de la paire de substrats.

4. Dispositif d'affichage à cristaux liquides selon la revendication 3, comprenant en outre :

au moins une ligne de signal d'analyse pour transmettre un signal de commutation à l'élément ou aux éléments de commutation, disposée entre le ou les films d'alignement et le premier substrat de la paire de substrats.

5. Dispositif d'affichage à cristaux liquides selon la revendication 1, comprenant en outre :

au moins une première électrode disposée entre la couche de cristaux liquides et le premier substrat de la paire de substrats ; et
au moins une deuxième électrode disposée entre la couche de cristaux liquides et l'autre substrat de la paire de substrats ;

dans lequel une transmissivité optique de la couche de cristaux liquides est modulée par un champ électrique appliqué entre la ou les premières électrodes et la ou les deuxièmes électrodes.

# FIG. 1

ALTERNATING VOLTAGE : V a (V)

EP 0 989 444 B1

# FIG. 2

IMAGE DATA

CONTROL SIGNAL

13

# FIG. 3

## (a)

Cstg

4

3

4 A

7

L C

6

3 A

y

0 → x

TFT    7 A ← c

1 A

4 A

4 A

2 2

## (c)

1 A    7    1 2

4

5

BM

1 4

FIL

2 2    BM

1 1

9    10  L C    1 B

1 3

## (b)

4 A   7   4 A   7   1 1

1 A

5

7    4 A

9

10   L C

L G

1 2   1 3

BM   FIL

1 B

# FIG. 4

208
209
207
$\Phi_P$
$\Phi_{LC}$
7
4 A

# FIG. 5

OPTICAL TRANSMISSIVITY：T (%)

FOR INCREASING —— VOLTAGE
FOR DROPPING ----- VOLTAGE

ΔT

ALTERNATING VOLTAGE：Va (V)

# *FIG. 6*

(a)

Imide-base

(b)

(c)

(d)

Amic-acid

# FIG. 7

VIDEO
SIGNAL
OUTPUT

# FIG. 8

(a)

(b)